# EUROPÄISCHE PATENTANMELDUNG

(11) **EP 1 609 958 A1**
(43) Veröffentlichungstag der Anmeldung: **28.12.2005**
(21) Anmeldenummer: 04014567.4
(22) Anmeldetag: 22.06.2004
(51) Int. Cl.: F01K 21/04, F02C 7/08

(54) **Gasturbine mit einem Verdichter und einem Rekuperator**

(71) Anmelder: SIEMENS AKTIENGESELLSCHAFT, 80333 München (DE)
(72) Erfinder: Hein, Olaf, 45481 Mülheim (DE); Werner, Klaus, Dr., 47574 Goch (DE)

(57) **Zusammenfassung**

Bei einer Gasturbine (10) mit mindestens einem Verdichter (12, 14) zum Zuführen verdichteter Brennluft zu einer Brennkammer (20), aus der Brenngase einer Turbine (22) zugeführt werden, und mit einem Rekuperator (18) zum Vorwärmen der Brennluft mit Hilfe der warmen Brenngase, ist erfindungsgemäß der mindestens eine Verdichter (12, 14) mit einer Einrichtung (16, 32) zum Vorkühlen der zugeführten Brennluft versehen.

## Beschreibung

Die Erfindung betrifft eine Gasturbine mit mindestens einem Verdichter zum Zuführen verdichteter Brennluft zu mindestens einer Brennkammer, aus der Brenngase einer Turbine zugeführt werden, und mit einem Rekuperator zum Vorwärmen der Brennluft mit Hilfe der warmen Brenngase.

Der starke Wettbewerb im Geschäftsfeld der Gasturbinen, insbesondere der stationären Gasturbinen, erfordert ständig Verbesserungen und Neuentwicklungen in diesem Bereich. Bekannte Techniken erscheinen aber weitgehend ausgereift zu sein.

Der Erfindung liegt die Aufgabe zugrunde, eine Gasturbine bereitzustellen, die im Vergleich zu bekannten Einrichtungen bei erheblich verringerten Kosten zumindest gleiche Wirkungsgrade erzielt.

Die Aufgabe ist erfindungsgemäß mit einer eingangs genannten Gasturbine gelöst, bei der mindestens ein Verdichter mit einer Einrichtung zum Vorkühlen der zugeführten Brennluft versehen ist.

Mit der erfindungsgemäßen Modifizierung der Prozessführung an bzw. in einer Gasturbine wird im Endeffekt ein völlig neuer Gasturbinentyp geschaffen. Erfindungsgemäß ergeben sich in der gesamten Prozesskette der Gasturbine andere Temperaturen, Drücke und Strömungseigenschaften, die bei entsprechender Gestaltung insgesamt zu einer erheblichen Kostensenkung bei gleichzeitig hohem Wirkungsgrad führen.

Durch das erfindungsgemäße Vorkühlen der Brennluft in einem Verdichter (z.B. auf zirka 80-100 °C oder darunter) und das nachfolgende Zuführen zu einem Rekuperator, werden am Rekuperator höhere Temperaturdifferenzen zwischen Brennluft und Abgas erzielt. Auf diese Weise können erfindungsgemäß höhere Wärmemengen übertragen werden. So können beispielsweise Temperaturdifferenzen von zirka 500 °C genutzt werden. Diese Temperaturdifferenzen ergeben sich z.B. zwischen der zirka 80-100 °C kalten Brennluft und dem zirka 550-660 °C heißen Abgas.

Bei herkömmlichen Prozessen betragen die Temperaturdifferenzen nur zirka 200 °C, denn die Brennluft wird einem bekannten Rekuperator mit einer Temperatur von zirka 400 °C zugeführt.

Trotz der erforderlichen Kühlung der verdichteten Brennluft, ergibt sich erfindungsgemäß insgesamt ein erheblicher Kostenvorteil. Dieser beruht auf dem Umstand, dass gemäß der Erfindung das Abgas von der Brennluft stärker gekühlt werden kann und dann am Abgastrakt keine Generator-Dampfturbine bzw. kein zweiter Kreislauf zur Stromerzeugung erforderlich ist oder nur eine kleinere Dampfturbine benötigt wird. Dies führt zu verringerten Herstellungs- und Betriebskosten, also insgesamt zu erheblich geringeren Kraftwerkskosten.

Die erfindungsgemäß am Verdichter abgeführte Wärme kann mittels eines Vorkühlers und einer kleinen, vergleichsweise kostengünstigen Industriedampfturbine und/oder als Fernwärme genutzt werden.

Alternativ kann die Überschussenergie aus dem Rekuperator mittels einer Hochdruckdampfturbine genutzt werden, deren Abdampf in einer Niederdruckdampfturbine, wie sie nachfolgend noch beschrieben werden wird, eingespeist wird. Der Gesamtwirkungsgrad einer solchen Hochdruckdampfturbine beträgt zwischen zirka 40 und 45 %.

Die Wärmeenergie, die durch den erfindungsgemäßen Prozess freigesetzt wird, kann zusätzlich noch für Heizzwecke eingesetzt werden, z.B. zur Brennstoffvorwärmung, Wasservorwärmung für Dampfkreisläufe und auch für Gebäudeheizungen.

Erfindungsgemäß ergeben sich auch vergleichsweise hohe Austrittstemperaturen der Brenngase an der Turbine. Dies führt zu einer geringeren Machzahlverteilung in diesem Bereich und somit zu verbesserten Strömungsverhältnissen.

Bei einer vorteilhaften Weiterbildung der Erfindung ist die mindestens eine Einrichtung zum Vorkühlen der zugeführten Brennluft als ein einer Verdichterstufe nachgeschalteter Zwischenkühler gestaltet. Mit einem derartigen Zwischenkühler kann die Endtemperatur der Verdichterluft vorteilhaft im Bereich zwischen etwa zirka 80 °C oder niedriger und zirka 120 °C eingestellt werden. Die Wärme aus der Verdichterzwischenkühlung kann von einer Niederdruckdampfturbine genutzt werden. Eine solche Turbine arbeitet z.B. bei 4 bar oder 1,3 bar Frischluftdruck und setzt die bereitgestellte Wärmeenergie mit einem Wirkungsgrad von zirka 10 % in elektrische Energie um.

Als Kühler kann vorteilhaft ferner eine Absorptionskältemaschine eingesetzt werden, bei der insbesondere die Wärme des Arbeitsfluids jeweils nach einem Verdichtungsvorgang zum Betrieb eines Kochers der Absorptionskältemaschine verwendet wird. Der Kühler bzw. Verdampfer der Absorptionskältemaschine kann dann vor oder innerhalb des Verdichtungsprozesses zum Einsatz kommen. Die Abwärme des Kondensators kann ebenfalls im Gesamtprozess mit eingebunden werden.

Ferner ist die mindestens eine Einrichtung zum Vorkühlen der zugeführten Brennluft vorteilhaft mit einem Kühler-Wärmeübertrager gestaltet. Auf diese Weise kann die Abwärme der Kühlung kostengünstig abgeführt und genutzt werden.

Der genannte Kühler-Wärmeübertrager ist vorteilhaft als Verdunstungskühler (beispielsweise einem Zwischenkühler oder einem Kühler nach dem Verdichter) gestaltet, der sehr wirtschaftlich beispielsweise mit einer Wasserzugabe von zirka 20 kg/s betrieben werden kann. Es kann so eine Verdichterendtemperatur von zirka 80 °C oder niedriger erreicht werden.

Alternativ oder zusätzlich sollte ein Wärmeübertrager zum Vorwärmen des Wassers des Verdunstungskühlers mit Hilfe des aus dem Rekuperator ausströmenden Brenngases vorgesehen sein. Auf diese Weise kann ein weiter erhöhter Wirkungsgrad erzielt werden. Es kann vorteilhaft Wasser von etwa 15 °C auf 80°C bis 120 °C aufgewärmt werden.

Die mindestens eine Einrichtung zum Vorkühlen der zugeführten Brennluft sollte ferner vorteilhaft mit einer Eindüseinrichtung für eine Flüssigkeit, insbesondere für Wasser gestaltet sein. Das eingespritzte Wasser ist zur Verdunstung im Verdichter vorgesehen, wodurch dieser als quasi isothermer Verdichter betrieben werden kann. Vorteilhafte Betriebsparameter bei dieser Art der Kühlung sind eine Zuführung von zirka 650 kg/s Luft und/oder zirka 60 kg/s Wasser. Es wird bevorzugt eine Verdichterendtemperatur von zirka 60 °C angestrebt. Auch eine Kombination einer Eindüsung mit einem Zwischenkühler bzw. einem dafür vorgesehenen Wärmeübertrager kann sinnvoll sein. So wird beispielsweise vorteilhaft mit einer ersten Druckstufe von zirka 6 bar gearbeitet, an der ein Zwischenkühler die verdichtete Luft auf zirka 40 °C abkühlt. In einer zweiten Druckstufe (Hockdruck) werden 20 kg/s Wasser zugegeben und verdunsten während des Verdichtungsprozesses. In dieser Druckstufe wird vorteilhaft eine Verdichterendtemperatur von zirka 80 °C angestrebt.

Damit ein hoher Wirkungsgrad erzielt werden kann, ist ferner vorteilhaft ein Wärmeübertrager zum Vorwärmen des der Eindüseinrichtung zugeführten Wassers mit Hilfe des aus dem Rekuperator ausströmenden Brenngases vorgesehen. Es sollten zirka 20 kg/s Wasser zugeführt werden, die unter Umständen auch bis zur oder nahe der Verdampfung vorgewärmt werden können.

Die erfindungsgemäße Gasturbine ist ferner vorteilhaft weitergebildet, indem eine Abzweigung zum Zuführen eines Teils der vorgekühlten Brennluft direkt zur Turbine und am Rekuperator vorbei vorgesehen ist. Für die direkte Zufuhr zur Turbine sollten zirka 15-20 % oder weniger des Luftmassenstroms abgezweigt werden. Ein Teil dieser abgezweigten Brennluft sollte schon nach einer ersten Verdichterstufe, beispielsweise mit 6 bar Druck entnommen werden. Mit der abgezweigten und direkt zur Turbine geführten Luft ist die Kühlluft an der Turbine insgesamt kühler und es kann auch mit weniger Kühlluft gearbeitet werden. Eine verringerte Kühlluftmenge wirkt sich auch positiv auf das Strömungsverhalten und auf Turbulenzen innerhalb der Turbine aus.

Der erfindungsgemäße Rekuperator ist bevorzugt mit einer Einrichtung zur Aufsättigung der Brennluft mit einer Flüssigkeit, insbesondere mit Wasser versehen. Die Aufsättigung führt zu einem besseren Wirkungsgrad der Gesamtanlage. Weil die Verdampfungsenthalpie des zugeführten Wassers zur Kühlung der nachfolgenden Turbine beiträgt, kann der Kühlluftanteil bezogen auf den Gesamtluftstrom vorteilhaft unter 15 % eingestellt werden. Eine solch geringe Kühllufteinblasrate führt zu einer geringeren Störung der Hauptbrenngasströmung und somit zu einem besseren Turbinenwirkungsgrad.

Der mindestens eine Verdichter und die Turbine sind ferner vorteilhaft drehmomentenübertragend, insbesondere auf einer gemeinsamen Welle miteinander gekoppelt. Die Schaufelspalte im Niederdruck- und einem Hochdruckverdichter und in der Turbine können dann individuell angepasst bzw. optimiert werden. Dies kann mit Hilfe von Schiebekupplungen an bzw. in der Welle erfolgen oder durch hydraulisch verschiebbare Gehäuseteile.

Bei der erfindungsgemäßen Gasturbine wird bevorzugt eine Brennkammer mit einer Brennerebene und einem sich anschließenden zylindrischen Flammrohr verwendet. Eine solche Brennkammer kann besonders vorteilhaft in das erfindungsgemäße Gesamtkonzept integriert werden.

Die Brenner der erfindungsgemäßen Gasturbine sollten mit einer Brennerwandung mit einzelnen Mischkanälen und/oder einem zentralen Brennrohr mit akustisch teilentkoppelten Schaufelkanälen gestaltet sein. Ein solcher Brenner ist bezüglich der Flammenstabilität besser für eine Brennstoffvorwärmung geeignet. Es ist vorteilhaft, wenn ein Vordrall in die Strömung vor der Turbine implementiert ist. Ein Anströmwinkel von zirka 5-10 Grad oder höher hat sich als besonders sinnvoll erwiesen. Auf diese Weise kann die Schaufelanzahl der Turbine reduziert werden, so dass wiederum weniger Kühlluft benötigt wird. Bei einem Betriebsdruck von 10 bar verringert sich die Gasstrahlung, womit sich der Kühlluftbedarf noch weiter verringern lässt.

Das Flammrohr der Brennkammer der erfindungsgemäßen Gasturbine sollte mit keramischen Schutzschildern ohne oder geringer Kühlluftausblasung versehen sein. Die dann zylindrische Brennkammeraußenwandung bietet gegenüber derzeitigen Bauweisen Kostenvorteile, insbesondere, wenn der Prozess mit nur 10 bar Druck in der Brennkammer betrieben wird. Ferner lässt sich ein solches Flammrohr ohne oder verkleinertem Nabenteil ausführen, wodurch nochmals Kostenreduzierungen zu erwarten sind.

Der Brennerabschnitt der erfindungsgemäßen Gasturbine kann vorteilhaft auch mit einer Zweistufenverbrennung (insbesondere bei zirka 20 bar Druck) gestaltet sein. Bekannte Vorteile einer solchen zweistufigen Verbrennung können so genutzt werden.

Die erfindungsgemäß eingebrachten Wassermengen sollten aus Kostengründen und aus Gründen des Umweltschutzes aufbereitet werden. Dazu ist an der erfindungsgemäßen Gasturbine vorteilhaft eine Deionat-Anlage vorgesehen. Das eingesetzte Wasser kann durch Auskondensieren in einem Abgaskanal der Gasturbine zurückgewonnen und entsprechend aufbereitet werden. Dies ist besonders beim Einsatz in wasserarmen Regionen von Vorteil.

Nachfolgend werden Ausführungsbeispiele einer erfindungsgemäßen Gasturbine anhand der beigefügten schematischen Zeichnungen näher erläutert. Es zeigt:
FIG 1 ein vereinfachtes Prinzipschaubild einer erfindungsgemäßen Gasturbine,
FIG 2 einen vereinfachten Längsschnitt eines ersten Ausführungsbeispiels einer erfindungsgemäßen Gasturbine und
FIG 3 einen vereinfachten Längsschnitt eines zweiten Ausführungsbeispiels einer erfindungsgemäßen Gasturbine.

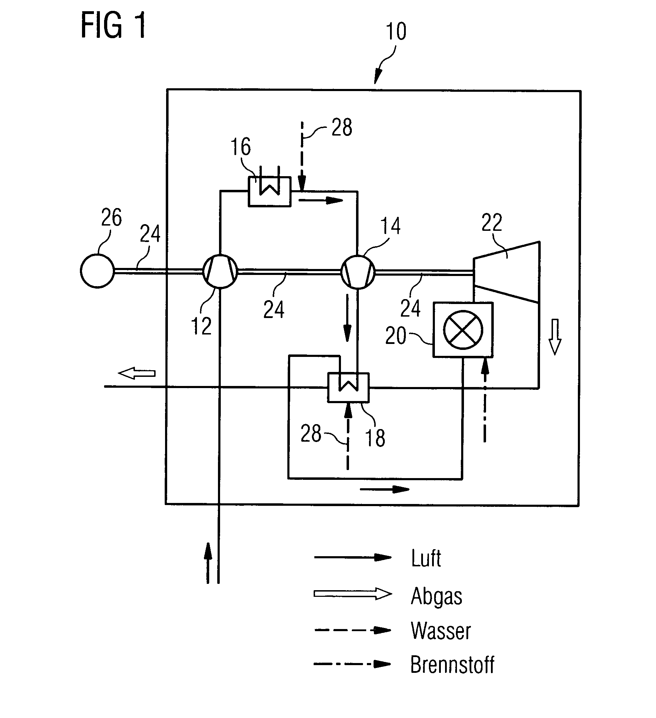

In FIG 1 ist ein vereinfachtes Prinzipschaubild einer erfindungsgemäßen Gasturbine 10 veranschaulicht, bei der Brennluft einem Verdichter mit einer ersten Verdichterstufe 12 und einer zweiten Verdichterstufe 14 zugeführt wird. Zwischen den Verdichterstufen 12 und 14 ist ein Zwischenkühler 16 angeordnet, mittels dem die zugeführte Brennluft vorgekühlt wird.

In Strömungsrichtung hinter der zweiten Verdichterstufe 14 gelangt die Brennluft in einen Rekuperator 18, von dem aus sie in eine Brennkammer 20 gelangt. Dort dient die Brennluft zur Oxidation eines Brennstoffes und gelangt nachfolgend als Brenngas bzw. Abgas in eine Turbine 22.

Die Turbine 22 treibt eine Welle 24 an, mit der sowohl die erste als auch die zweite Verdichterstufe 12 bzw. 14 momentenübertragend gekoppelt sind. Mit der Welle 24 wird zur Erzeugung elektrischen Stroms ferner ein Generator 26 angetrieben.

Die aus der Turbine 22 austretenden Brenngase werden durch den Rekuperator 18 geleitet, in dem ihre Abwärme zum Aufwärmen der verdichteten und zwischengekühlten Brennluft genutzt wird.

Am Zwischenkühler 16 und am Rekuperator 18 ist jeweils eine Wasserzugabe 28 vorgesehen, mittels denen die Brennluft bzw. eine am Rekuperator 18 vorbeigeleitete Kühlluft für die Turbine 22 zusätzlich gekühlt werden. Eine Wasserzugabe oder auch der Einsatz einer Kältemaschine ist ferner auch vor dem Verdichter möglich.

Die Gasturbine 10 aus FIG 1 beinhaltet damit eine modifizierte Prozessführung, die mit mindestens gleichen, wenn nicht besseren Wirkungsgraden operiert, wie bzw. als bekannte Gasturbinen. Die Kosten zum Herstellen und Betreiben der Gasturbine 10 sind jedoch erheblich geringer als bei bekannten Systemen. Die Gasturbine 10 ist grundsätzlich modular aufgebaut, wobei die beiden Verdichterstufen 12 und 14 auf der gemeinsamen Welle 24 angeordnet sind.

Für den aus Verdichterstufe 12 und 14 zusammengesetzten Verdichter werden drei grundsätzliche Varianten vorgeschlagen:

Bei einer ersten, so genannten quasi isothermen Verdichter-Variante wird einem Brennluft- bzw. Arbeitsmassenstrom von zirka 650 kg/s während des Verdichtungsvorgangs zirka 60 kg/s Wasser zugeführt, das im Verdichter verdunstet. Die Verdichterendtemperatur beträgt zirka 60°C, der Verdichterenddruck zirka 10 bar.

Bei einer zweiten, so genannten zwischengekühlten Verdichter-Variante mit Wasserzugabe im Hochdruckteil, wird bei einer Druckstufe von knapp 6 bar die Verdichterluft in einem Zwischenkühler auf zirka 40 °C heruntergekühlt. In einem sich anschließenden Hockdruckteil werden zirka 20 kg/s Wasser zugegeben, die möglichst noch während des Verdichtungsprozesses verdunsten sollen. Es wird eine Verdichterendtemperatur von 80 °C angestrebt.

Bei einer dritten, so genannten zwischengekühlten Verdichter-Variante ohne Wasserzugabe erfolgt nur eine Wasserzugabe nach dem Verdichter, wobei mittels zirka 20 kg/s Wasser die Verdichterluft auf zirka 80 °C heruntergekühlt wird, so dass das Energiepotential der Turbinenabgase bzw. Brenngase in dem sich anschließenden Rekuperator weitestgehend genutzt werden kann.

Im Rekuperator wird die Verdichterluft von zirka 80 °C auf zirka 660 °C aufgeheizt. Vor dem Rekuperator werden zirka 15 % des Luftmassenstroms für die Turbinenkühlung abgezweigt. Ein Teil der Kühlluft wird auch bereits an der Druckstufe von zirka 6 bar am Verdichter entnommen. Weil der die Brennluft und den Brennstoff umfassende Abgasmassenstrom deutlich größer ist, als der Luftmassenstrom, der zur Brennkammer gelangt, kann die Überschusswärmemenge entweder in einer Hochdruckdampfturbine oder aber zur Verdampfung von weiteren zirka 20 kg/s Wasser genutzt werden, die dem Gasturbinenarbeitsmedium beigefügt werden. Die Druckverluste des Rekuperators sind auf unter zirka 2 % des Verdichterenddrucks gesenkt. Die Kühlluft für die Turbine kann durch Zugabe von Wasser, insbesondere zu einem Wassergehalt von maximal 8 %, bis auf etwa 40 °C heruntergekühlt werden.

Die Brennkammer umfasst eine Brennerebene und ein sich anschließendes Flammrohr. Das erfindungsgemäße Konzept begünstigt dabei einen schnellen und einfachen Wechsel des kompletten Flammrohrs, weil die Brennerebene nicht bewegt werden muss. Das Turbinengehäuse der erfindungsgemäßen Gasturbine kann vorteilhaft hydraulisch zurückgezogen werden. Ein Servicekonzept für die Brennkammer könnte daher so aussehen, dass die Brennkammer in Betrieb ist, während eine zweite Brennkammer in Reserve vorrätig ist.

Als Brenner kommen entweder vorteilhaft zwischen 20 und 28, insbesondere 24 Standardbrenner zum Einsatz, die mit einem modifizierten Diagonalgitter versehen sind. Alternativ kann eine Brennerwandung mit einzelnen Mischkanälen und einem zentralen Standardbrenner in der Mitte zur Anwendung kommen. Schaufelkanäle an der Turbine können bzw. sollten dabei nach dem Prinzip eines akustisch teilentkoppelten Brenners gestaltet sein. Der letztgenannte Brennertyp weist den Vorteil auf, dass eine Brennstoffvorwärmung nicht bzw. kaum zu Flamminstabilitäten führt. Ferner kann mit ihm in die Strömung an der Turbine ein Vordrall implementiert werden. Sinnvoll sind dabei Anströmwinkel von 5 bis 10 Grad. Dies eröffnet auch die Möglichkeit die Anzahl der so genannten Tle 1-Schaufeln zu reduzieren und somit weitere Kühlluft einzusparen. Insbesondere bei einem Gasdruck von etwa 10 bar verringert sich die Gasstrahlung, womit sich der Kühlluftbedarf noch weiter senken lässt.

Das Flammrohr der erfindungsgemäßen Gasturbine ist mit keramischen Schutzschildern ohne oder geringer Kühlluftausblasung gestaltet. Eine dabei vorgesehene zylindrische Brennkammeraußenwandung bietet gegenüber bekannten Bauweisen deutliche Kostenvorteile, insbesondere dann, wenn ein Prozess mit nur 10 bar Druck zum Einsatz kommt. Weil sich ein solches Flammrohr wie erwähnt ohne Nabenteil ausführen lässt, sind weitere Kostenreduzierungen möglich.

Die Turbine selbst ist fliegend gelagert und kann beispielsweise bei einem Betriebsdruck von 10 bar dreistufig gestaltet sein. Der Kühlluftanteil ist vorteilhaft bezogen auf den Gesamtluftstrom auf unter 15 % gesenkt. Ferner wird mit einer im Vergleich zu bekannten Prozessen etwas höheren Turbinenaustrittstemperatur gearbeitet. Dies führt zu einer geringeren Machzahlverteilung an dieser Stelle und somit zu besseren Strömungsverhältnissen.

Die Gasturbinenmodule laufen vorteilhaft alle auf einer Welle, wobei die Schaufelspalte in der ersten Verdichterstufe (Niederdruckverdichter) und der zweiten Verdichterstufe (Hochdruckverdichter) mit Hilfe von Schiebekupplungen oder durch hydraulisch verschiebbare Gehäuseteile einstellbar sind. Die oben erwähnten Dampfturbinen laufen jeweils auf eigenen Wellen. Als Dampfturbinen werden eine Niederdruckdampfturbine mit einem Druck von zirka 4 bar oder etwa 1,3 bar Frischdampfdruck und eine Hochdruckdampfturbine verwendet, welche die Überschussenergie aus dem Rekuperator nutzt. Der Abdampf der Hochdruckturbine wird ebenfalls in die Niederdruckdampfturbine eingespeist, welche ferner die Wärme aus der Verdichterzwischenkühlung erhält. Die Wärmemenge, die darüber hinaus aus dem Prozess entnommen werden kann, kann zusätzlich auch für Heizzwecke, z.B. für Brennstoffvorwärmung, Wasservorwärmung für die Dampfkreisläufe und für Gebäudeheizungen verwendet werden.

Als Nebenaggregat der Gasturbine ist eine Deionat-Anlage vorgesehen. Das in den Prozess eingespeiste Wasser wird dabei in einem Abgaskanal der Turbine auskondensiert und nach der Aufbereitung wieder verwendet.

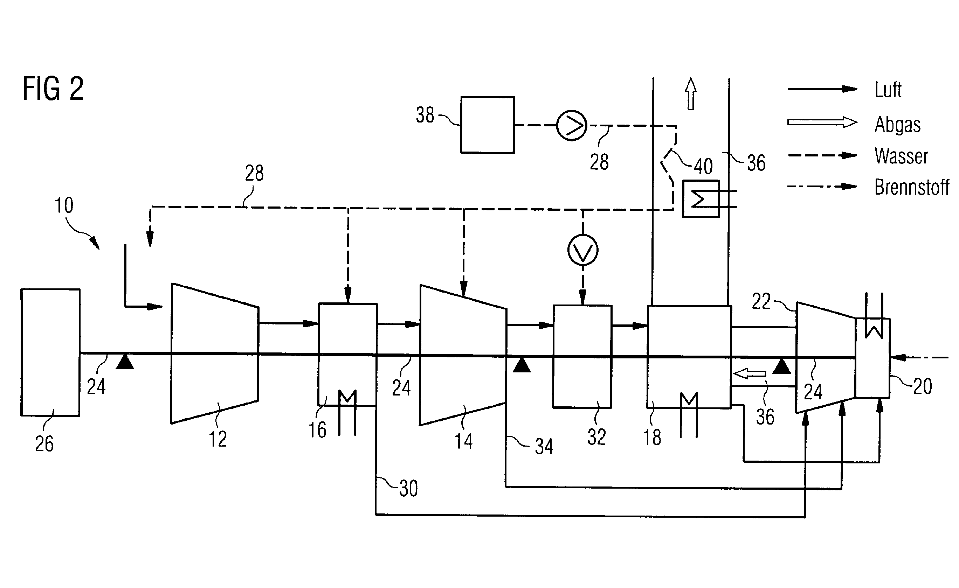

In FIG 2 ist ein Ausführungsbeispiel einer Gasturbine 10 dargestellt, bei der an einer ersten Verdichterstufe 12 zirka 650 kg/s oder mehr Luft bzw. Brennluft auf etwa 6 bar verdichtet werden. Die Temperatur der Luft steigt dabei von etwa 15 °C auf zirka 220 °C an. An die erste Verdichterstufe 12 schließt ein Zwischenkühler 16 an, an dem die verdichtete Luft auf eine Temperatur von etwa 50 °C abgekühlt wird. Diese Abkühlung erfolgt mit Hilfe eines Verdunstungskühlers, eines Dampfkreislaufs oder mit einer Fernwärmeentnahme. Von der vorverdichteten und zwischengekühlten Luft werden etwa 13 % durch eine erste Abzweigung 30 zu einer nachfolgend beschriebenen Turbine 22 geleitet.

Die restliche Luft gelangt zu einer zweiten Verdichterstufe 14, in der mittels einer Radialstufe oder Axialstufe die Luft verdichtet und dabei auf zirka 160 °C aufgeheizt wird. Optional wird an dieser zweiten Verdichterstufe Wasser zur Verdunstung beigegeben. Alternativ oder zusätzlich kann in Strömungsrichtung hinter der zweiten Verdichterstufe 14 ein Verdunstungskühler 32 angeordnet sein, an dem die Luft nochmals auf etwa 140 °C abgekühlt wird. Von der aus der zweiten Verdichterstufe 14 austretenden Luft werden etwa 15 % durch eine zweite Abzweigung 34 direkt als Kühlluft zur Turbine 22 geleitet.

Die verdichtete und gekühlte Luft gelangt aus dem Verdunstungskühler 32 in einen Rekuperator 18, durch den hindurch eine Abgasleitung 36 der Turbine 22 geführt ist. Mit der im Abgas enthaltenen Wärmeenergie wird im Rekuperator 18 die Luft aus dem Verdunstungskühler 32 ausgehend von einer Temperatur von 140 °C auf eine Temperatur von etwa 600 °C aufgeheizt. Ferner kann am Rekuperator 18 noch ein Dampfkreislauf zum Abführen von Wärmeenergie zu einer Dampfturbine vorgesehen sein.

In Strömungsrichtung der Luft ist hinter dem Rekuperator 18 eine Brennkammer 20 vorgesehen, in die hinein die Luft als Brennluft gefördert wird. Die Brennkammer 20 arbeitet mit einer Betriebstemperatur von etwa 1440 °C und kann mit einem eigenen Dampfkreislauf gekühlt werden. An der Brennkammer 20 ist eine Turbine 22 angeordnet, durch die das heiße Abgas aus der Brennkammer geleitet wird. Die Turbine 22 treibt eine Welle 24, mittels der auch die erste und die zweite Verdichterstufe 12 bzw. 14 sowie ein Generator 26 angetrieben werden. Das Abgas strömt weiter durch den oben genannten Rekuperator 18 und durch eine Abgasleitung 36, in der ein weiterer Dampfkreislauf zur weiteren Kühlung des Abgases vorgesehen sein kann.

Die oben erwähnte Beimischung von Wasser an der ersten Verdichterstufe 12, dem Zwischenkühler 16, der zweiten Verdichterstufe 14 bzw. dem Verdunstungskühler 32 erfolgt mit Hilfe einer Wasserzugabe 28, in die hinein von einer Deionat-Anlage 38 aufbereitetes Wasser eingespeist wird. Das Wasser wird dabei durch einen Wärmetauscher 40 geleitet, der in der Abgasleitung 36 hinter dem Rekuperator 18 angeordnet ist, und wird dadurch von einer Ausgangstemperatur von etwa 15 °C auf etwa 50 °C vorgewärmt.

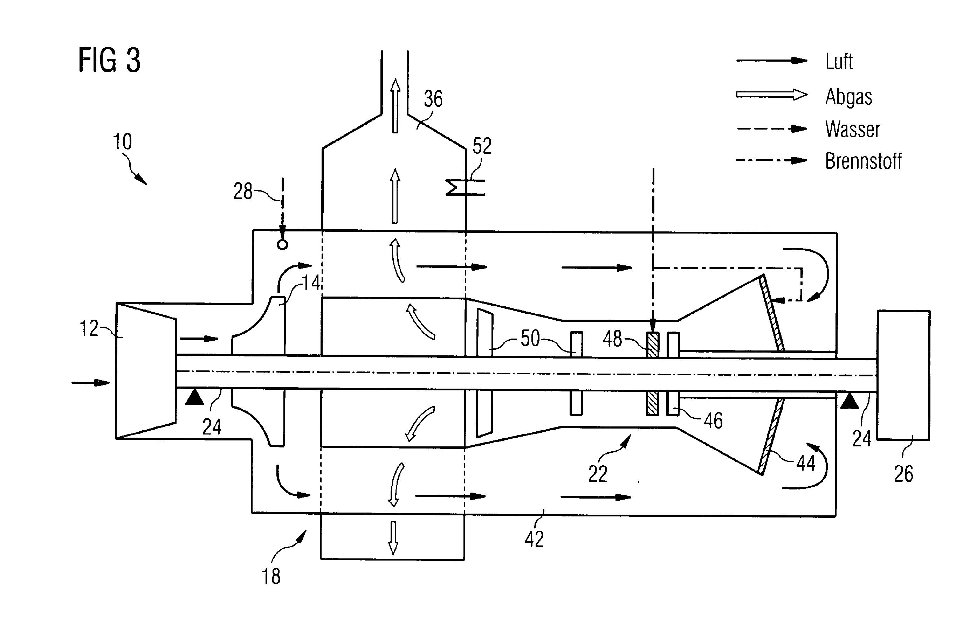

In FIG 3 ist ein Ausführungsbeispiel einer Gasturbine 10 dargestellt, bei der als erste Verdichterstufe 12 ein gekühlter Axialverdichter vorgesehen ist. Der Axialverdichter wird von einer Welle 24 angetrieben, auf der ferner als zweite Verdichterstufe 14 ein Radialverdichter (ggf. auch ein Axialverdichter) umläuft. Der Radialverdichter verdichtet die aus dem Axialverdichter zugeführte Luft von etwa 6 bar auf etwa 20 bar Druck. Im Bereich der zweiten Verdichterstufe 14 ist optional eine Wasserzugabe 28 vorgesehen. Die Luft strömt weiter durch einen Wärmetauscher, der als Rekuperator 18 wirkt.

Nachfolgend durchströmt die Luft ein längliches Gehäuse 42 der Gasturbine 10 und wird an dessen Stirnseite umgelenkt. Die Luft umströmt dabei eine in dem Gehäuse angeordnete zweistufige Turbine 22, an der eine erste Brennerebene 44 und eine zugehörige Hochdruck-Turbinenlaufschaufelgruppe 46 sowie eine zweite Brennerebene 48 mit einer zugehörigen Niederdruck-Turbinenlaufschaufelgruppe 50 vorgesehen sind.

An den Brennerebenen 44 und 48 wird gasförmiger Brennstoff zugeführt, der in Verbindung mit der zugeführten, verdichteten, zunächst gekühlten und dann im Rekuperator 18 aufgeheizten Luft verbrannt wird.

Das entstehende Abgas wird mit einer Abgasleitung 36 durch den Rekuperator 18 geführt. In der Abgasleitung 36 kann ferner zur Wärmeauskopplung optional ein Dampfkreislauf 52 angeordnet sein.

## Patentansprüche

1. Gasturbine (10) mit mindestens einem Verdichter (12, 14) zum Zuführen verdichteter Brennluft zu mindestens einer Brennkammer (20), aus der Brenngase einer Turbine (22) zugeführt werden, und mit einem Rekuperator (18) zum Vorwärmen der Brennluft mit Hilfe der warmen Brenngase,
**dadurch gekennzeichnet, dass** der mindestens eine Verdichter (12, 14) mit einer Einrichtung (16, 32) zum Vorkühlen der zugeführten Brennluft versehen ist.

2. Gasturbine nach Anspruch 1,
**dadurch gekennzeichnet, dass** die mindestens eine Einrichtung (16, 32) zum Vorkühlen der zugeführten Brennluft als ein einer Verdichterstufe (12) nachgeschalteter Zwischenkühler (16) gestaltet ist.

3. Gasturbine nach Anspruch 1 oder 2,
**dadurch gekennzeichnet, dass** die mindestens eine Einrichtung zum Vorkühlen der zugeführten Brennluft mit einer Absorptionskältemaschine gestaltet ist.

4. Gasturbine nach Anspruch 1 oder 2,
**dadurch gekennzeichnet, dass** die mindestens eine Einrichtung (16, 32) zum Vorkühlen der zugeführten Brennluft mit einem Kühler-Wärmeübertrager (32) gestaltet ist.

5. Gasturbine nach Anspruch 4,
**dadurch gekennzeichnet, dass** der Kühler-Wärmeübertrager als Verdunstungskühler (32) gestaltet ist.

6. Gasturbine nach Anspruch 5,
**dadurch gekennzeichnet, dass** ein Wärmeübertrager (40) zum Vorwärmen des Wassers des Verdunstungskühlers (32) mit Hilfe des aus dem Rekuperator (18) ausströmenden Brenngases vorgesehen ist.

7. Gasturbine nach einem der vorhergehenden Ansprüche,
**dadurch gekennzeichnet, dass** die mindestens eine Einrichtung (16, 32) zum Vorkühlen der zugeführten Brennluft mit einer Eindüseinrichtung (28) für eine Flüssigkeit, insbesondere für Wasser gestaltet ist.

8. Gasturbine nach Anspruch 7,
**dadurch gekennzeichnet, dass** ein Wärmeübertrager (40) zum Vorwärmen des der Eindüseinrichtung (28) zugeführten Wassers mit Hilfe des aus dem Rekuperator (18) ausströmenden Brenngases vorgesehen ist.

9. Gasturbine nach einem der vorhergehenden Ansprüche,
**dadurch gekennzeichnet, dass** eine Abzweigung (30)zum Zuführen eines Teils der vorgekühlten Brennluft direkt zur Turbine (22) und am Rekuperator (18) vorbei vorgesehen ist.

10. Gasturbine nach einem der vorhergehenden Ansprüche,
**dadurch gekennzeichnet, dass** der Rekuperator (18) mit einer Einrichtung (28) zur Aufsättigung der Brennluft mit einer Flüssigkeit, insbesondere mit Wasser versehen ist.

11. Gasturbine nach einem der vorhergehenden Ansprüche,
**dadurch gekennzeichnet, dass** der mindestens eine Verdichter (12, 14) und die Turbine (22) drehmomentenübertragend, insbesondere an einer gemeinsamen Welle (24) miteinander gekoppelt sind.

12. Gasturbine nach einem der vorhergehenden Ansprüche,
**dadurch gekennzeichnet, dass** eine Brennkammer (20) mit einer Brennerebene (48) und einem sich anschließenden zylindrischen Flammrohr vorgesehen ist.

13. Gasturbine nach einem der vorhergehenden Ansprüche,
**dadurch gekennzeichnet, dass** mindestens ein Brenner mit einer Brennerwandung mit einzelnen Mischkanälen und/oder einem zentralen Brennrohr mit akustisch teilentkoppelten Schaufelkanälen vorgesehen ist.

14. Gasturbine nach einem der vorhergehenden Ansprüche,
**dadurch gekennzeichnet, dass** ein Flammrohr mit keramischen Schutzschildern ohne Kühlluftausblasung vorgesehen ist.

15. Gasturbine nach einem der vorhergehenden Ansprüche,
**dadurch gekennzeichnet, dass** der Brennerabschnitt der Gasturbine mit einer Zweistufenverbrennung (44, 48) gestaltet ist.

16. Gasturbine nach einem der vorhergehenden Ansprüche,
**dadurch gekennzeichnet, dass** eine als Deionat-Anlage (38) gestaltete Wasseraufbereitung vorgesehen ist.
